# EUROPEAN PATENT APPLICATION

(11) **EP 2 613 244 A2**
(43) Date of publication of application: **10.07.2013**
(21) Application number: 12196787.1
(22) Date of filing: 12.12.2012
(51) Int. Cl.: G06F 3/0487, G06F 3/0488, G06F 1/16

(54) **Apparatus and method for displaying screen on portable device having flexible display**

(30) Priority: 06.01.2012 KR 20120001832
(71) Applicant: Samsung Electronics Co., Ltd, Gyeonggi-do 443-742 (KR)
(72) Inventor: Shin, Seungwoo, 443-742 Gyeonggi-do (KR); Kwon, Giangyoon, 443-742 Gyeonggi-do (KR); Park, Soyoung, 443-742 Gyeonggi-do (KR); Um, Taewon, 443-742 Gyeonggi-do (KR)
(74) Representative: Nederlandsch Octrooibureau

(57) **Abstract**

A method and apparatus of displaying a screen on a portable device is disclosed. The method and apparatus include a display unit configured to be a bendable flexible display and a touch panel integrally configured with the display unit for detecting touch input. The method and apparatus include: detecting bending of a display unit configured by a flexible display; dividing a display region of the display unit based on the bending location when the bending of the display unit is detected; and displaying separate display data on the divided display regions by separating the display data.

## Description

### BACKGROUND OF THE INVENTION

### Field of the Invention

The present invention relates to an apparatus and a method for a display screen, and more particularly, to an apparatus for a display screen on a portable device having a flexible display.

### Description of the Related Art

In recent years, display screens on portable devices have had a general tendency to use touch screen devices consisting of both an integral touch panel and a display panel. The touch screen thus serves the purpose of both an integral display and an input device by incorporating the touch panel with a display panel. The touch panel is capable of identifying a location of the touch of a finger tip or other object that makes contact with the touch screen. The touch screen consists of a rectangular lattice configured with touch sensors which are not visible to the user..

However, there are problems associated with conventional touch screens applied to glass substrates. Glass is fragile, inflexible, and is limited in the manufactured shape of the display. To overcome these limitations, the touch screen may be implemented on a flexible display. The flexible display can replace the folding and unfolding of a conventional glass substrate surrounding a liquid crystal display with a plastic film in an LCD or an OLED type display, for example. The flexible display provides advantages to conventional glass displays including being thin and light, robust to resist shock, bendable, and can be manufactured to create a variety of shapes.

### SUMMARY OF THE INVENTION

An exemplary aspect of the present invention is to solve at least the above-mentioned problems and/or disadvantages and to provide at least the advantages described below. Accordingly, a method and apparatus of displaying a screen on a portable device is disclosed. The method and apparatus including a display unit configured to be a bendable flexible display and a touch panel integrally configured with the display unit for detecting touch input. The method and apparatus includes: detecting bending of a display unit configured by a flexible display; dividing a display region of the display unit based on the bending location when the bending of the display unit is detected; and displaying separate display data on the divided display regions by separating the display data.

Another exemplary aspect of the present invention is to provide an apparatus and method capable of identifying a layout of respective screens divided by bending a display to display screen data having different functions in a portable terminal having a flexible display.

Another exemplary aspect of the present invention is to provide an apparatus for displaying a viewing screen for specific scenes on a main screen and screen data configured by data specified in a touch interaction of the viewing screen on an auxiliary screen during a bending action of the screen in a portable device and includes a flexible display.

Another exemplary aspect of the present invention is to provide an apparatus and method for displaying content (web pages) on a main screen and various touch interactions such as buttons, address windows, and touchpads on an auxiliary screen during a browser display in a portable terminal having a flexible display.

In accordance with another exemplary aspect of the present invention, a portable device includes: a display unit configured by a bendable flexible display; a touch panel integrally configured with the display unit for detecting touch input; a sensor mounted in a bending location of the display unit for detecting bending of the display unit; and a controller dividing a display region of the display unit based on the bending location of the display unit when the bending of the display unit is detected from an output of the sensor, and separately outputting display data on respective divided display regions.

In accordance with another exemplary aspect of the present invention, a method of displaying a screen on a portable device, includes: detecting bending of a display unit configured by a flexible display; dividing a display region of the display unit based on the bending location when the bending of the display unit is detected; and displaying separate display data on the divided display regions by separating the display data.

### BRIEF DESCRIPTION OF THE DRAWINGS

The above features and advantages of the present invention will be more apparent from the following detailed description in conjunction with the accompanying drawings, in which:
FIG. 1 is a block diagram illustrating a configuration of a portable device according to an exemplary embodiment of the present invention;
FIG. 2 is a diagram illustrating an example of display according to presence of bending of a display unit in the portable device according to an exemplary embodiment of the present invention;
FIG. 3 is a block diagram illustrating an example of screen display regions set by bending a display unit being a flexible display according to an exemplary embodiment of the present invention;
FIG. 4 is a flowchart illustrating a method of controlling data displayed by bending a display unit of a portable device according to an exemplary embodiment of the present invention;
FIG. 5 is a flowchart illustrating an operation when a browser application is executed in a portable device having a flexible display according to an exemplary embodiment of the present invention;
FIGS. 6a and 6b are diagrams illustrating a screen display example when the operation shown in FIG. 5 is performed according to an exemplary embodiment of the present invention;
FIG. 7 is a flowchart illustrating a method of performing a smart mirror application in a portable device having a flexible display according to an exemplary embodiment of the present invention;
FIGS. 8a to 8e are diagrams illustrating display examples of a smart mirror application performed by the method shown in FIG. 7, respectively according to an exemplary embodiment of the present invention; and
FIG. 9 is a diagram illustrating an operation during an image call in the portable device having a flexible display according to an exemplary embodiment of the present invention.

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. For the purposes of clarity and simplicity, detailed descriptions of well-known functions and structures incorporated herein may be omitted to avoid obscuring the subject matter of the present invention.

In an aspect of the present invention, when a flexible display attached to a portable device is bent, the portable device displays data having different functions on a plurality of screens divided by bending according to a user purpose and environment. That is, the portable device according to an embodiment of the present invention provides an apparatus and a method which divides data output on one screen into respective display regions during the bending of a display to display the data output on respective screens. In this case, data output on the divided screens may be data that is closely connected. For example, a screen may be divided into a main screen and an auxiliary screen by bending the display. For example, image data or main data are displayed on the main screen and a touch interaction function for controlling data of the main screen may be displayed on the auxiliary screen. In this case, touch interaction with respect to each screen may influence actions on a corresponding screen and a neighboring screen. Accordingly, data output on the screen may be separately output on the divided screens. A method of bending a display in a portable device having the flexible display may vary and the above discussion merely intended to provide a few examples.

The portable device may be a tablet, PC (PC, notebook PC, slate PC), a portable phone, a MP3 terminal, a TV, or a monitor.

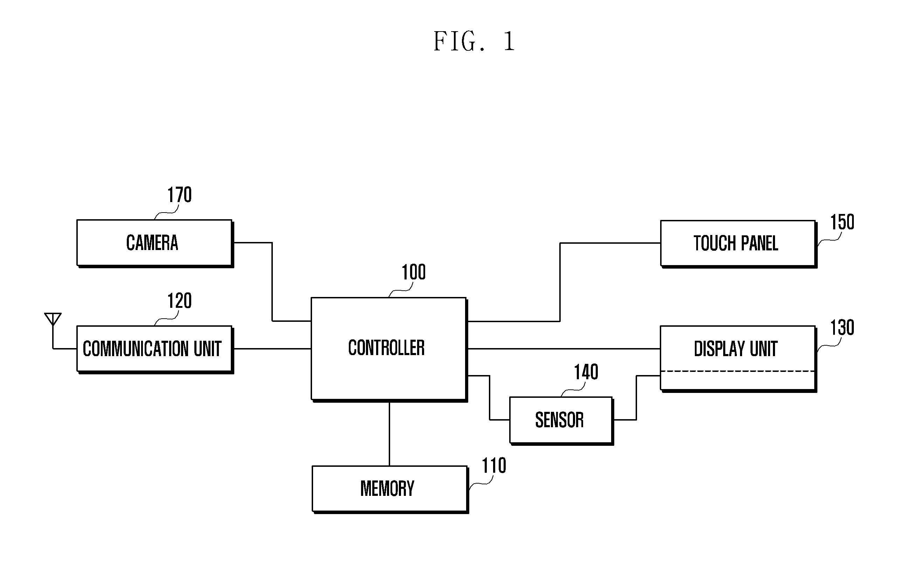

FIG. 1 is a block diagram illustrating a configuration of a portable device according to an exemplary embodiment of the present invention.

Referring to FIG. 1, a communication unit 120 performs a wireless communication function with a base station or other devices. The communication unit 120 may include a transmitter up-converting a frequency of a transmitted signal and amplifying the converted signal and a receiver low-noise-amplifying a received signal and down-converting the amplified signal. The communication unit 120 may include a modulator and a demodulator. The modulator modulates the transmitted signal and transfers the modulated signal to the transmitter and the demodulator demodulates a signal received by the receiver. In this case, the modulator and the demodulator may be LTE, WCDMA, GSM, WIFI, WIBRO, WIMAX, NFC, or Bluetooth, for example.

The display unit 130 is a flexible display, and may be an LCD or an OLED panel, for example, displaying data or images generated during execution of a program.

A sensor 140 performs a function of detecting whether the display unit 130 is bent greater than a predetermined angle. For example, the display unit 130 is a flexible display, and may be configured in which a substrate fixing an LCD or an OLED uses a bendable plastic film, and the display 130 may be bent in a predetermined location of a bezel which fixes the LCD or the OLED to a plastic substrate. In this case, a configuration for bending the display unit 130 may be performed by a hinge. A sensor 140 detects a hinge operation. When an angle of the display unit 130 bent by the hinge exceeds a preset angle, the sensor 140 performs the function of detecting it.

A touch panel 150 may detect touch inputs of a user, and may be integrally configured in the display unit 130. That is, the touch panel 150 and the display unit 130 may be an integral touch screen. The controller 100 controls an overall operation of the portable terminal. According to one embodiment of the present invention, when the display unit 130 is bent, the controller 100 executes the function that displays data having different functions on a plurality of screens divided as a result of bending in accordance with a user purpose and environment.

A memory 110 may include a program memory storing an operation program of a portable device and a data memory storing tables for operating the terminal and data generated during execution of a program. The memory 110 may store user environment information to be displayed on screens of the display unit 130 which are divided as a result of bending in an application executed when a display is bent. That is, when the display unit 130 is bent, the memory 110 may include a table storing information to be displayed on respective display regions by the executed applications.

A camera 170 performs a function of acquiring an external image under control of the controller 100.

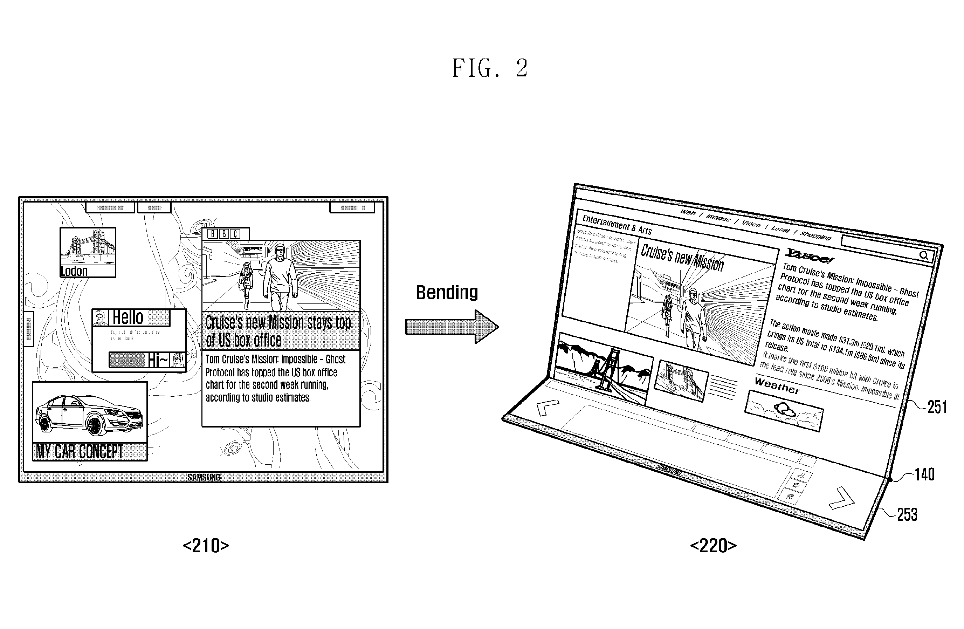

FIG. 2 is a diagram illustrating an example of a display in a normal state and display of a bending state on a display unit 130 in a portable device according to an embodiment of the present invention.

The controller 100 analyzes an output of the sensor 140 to determine whether the display unit 130 is bent. In this case, as illustrated in reference numeral 210 of FIG. 2, in a state that the display unit 130 is not bent, the controller 100 displays data on a full screen of the display unit 130. Continuing in the progression of FIG. 2, the image shown in reference numeral 210 continues to be displayed. If the display unit 130 is bent as illustrated in reference numeral 220, the controller 100 detects the bending of the display unit 130 by the sensor 140, and divides a screen of the display unit 130 into reference numerals 251 and 253 of reference numeral 220. The controller 100 separates display data according to characteristics of a currently executed application and separately transfers the display data to screen display regions 251 and 253. In the case of reference numeral 220, the screen display region 251 displays image data and the screen display region 253 displays a touch interaction (e.g., touch button) for controlling data displayed on the screen display region 251. In this case, the screen display region 251 may be a main screen display region and the screen display region 253 may be an auxiliary screen display region.

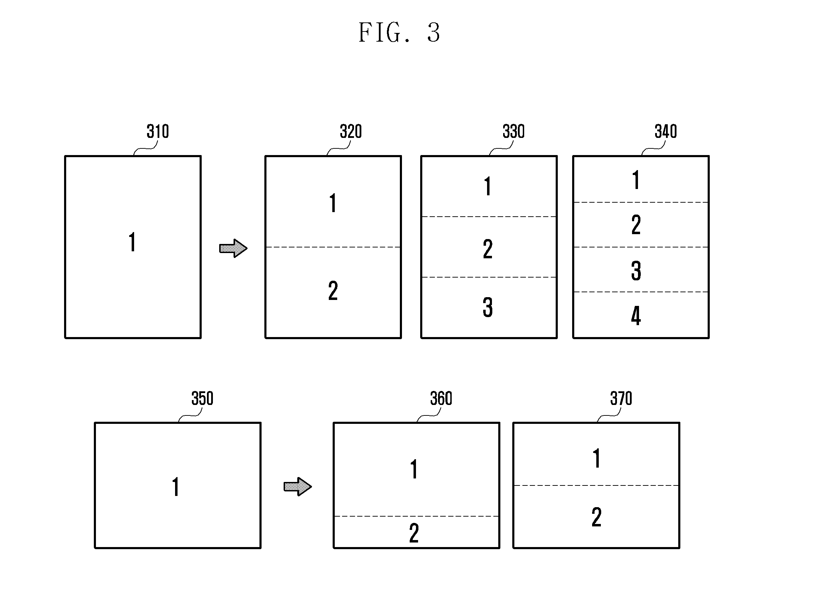

FIG. 3 is a diagram illustrating an example of screen display regions set by bending a display unit 130. The display unit 130 comprises a flexible display according to an exemplary embodiment of the present invention. The following description will be made on the assumption that the display unit 130 is bent by a hinge. However, it is understood that other configurations are capable of bending the display unit 130 and the display unit 130 may perform the same function according to embodiments of the present invention. For example, when a bezel fixing a display device (e.g., LCD, OLED) and a substrate (e.g., plastic film) is a material capable of being bent greater than a predetermined angle, even if the hinge is not used, the same effect may result.

Referring to FIG. 3, when a display unit 130 displays a portrait screen, a hinge is mounted in a specific location of a bezel of the display unit 130 and a sensor 140 detecting rotation of the hinge is connected to the hinge. Accordingly, the number of bending screens may be determined according to the number of hinges. Reference numeral 320 illustrates an example whereby two display screens are configured by bending. Reference numeral 330 illustrates an example whereby three display screens are configured by bending. Reference numeral 340 illustrates an example whereby four display screens are configured by bending. Reference numerals 320 to 340 illustrate examples where screens having the same size are configured. However, screens having different sizes may be configured according to a location of the hinge. That is, a location of mounting a hinge for bending the display unit 130 in a bezel may be configured in an appropriate location if necessary. When dividing the display screen, a top screen displaying content and a bottom screen displaying touch interaction information may be configured to have different sizes, or the bottom screen displaying the touch interaction information may be configured to have a relatively small size. A bottom screen of the display unit 130 displaying the touch interaction information is set to a region in which the portable device makes contact with a solid surface, so that the touch interaction information may be stably inputted.

As illustrated in reference numeral 320, when the display unit 130 displays a landscape screen, as described above, a hinge is mounted in a specific location of a bezel of the display unit 130 and a screen of the display may be separately configured by rotation of the hinge. Reference numerals 360 and 370 illustrate an example of dividing a screen of the display unit 130 into two regions using one hinge. Also, 360 is an example having different screen sizes according to a location of a hinge mounted in the bezel.

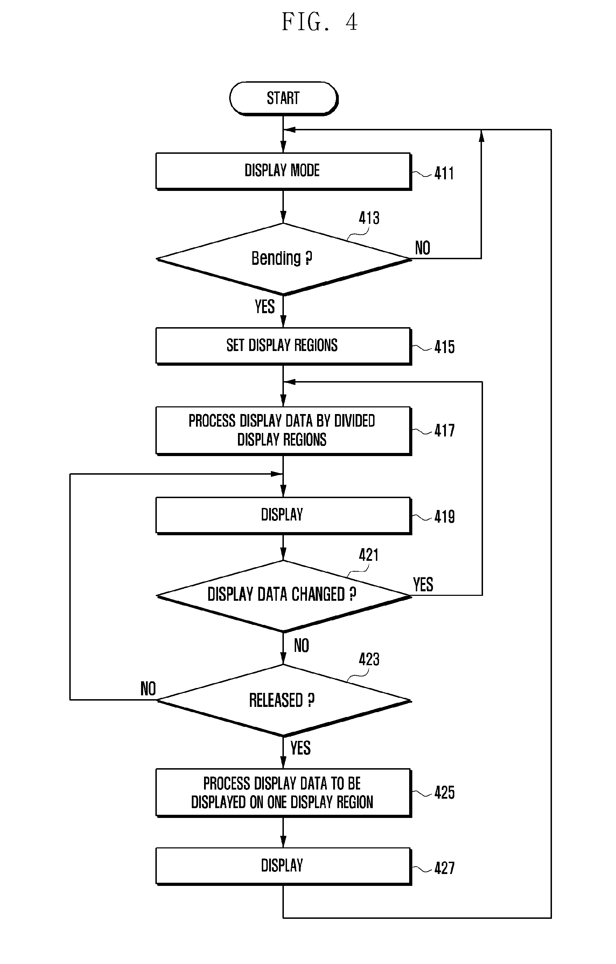

FIG. 4 is a flowchart illustrating a method for controlling data displayed by bending a display unit of a portable device according to an exemplary embodiment of the present invention. The following description will be made on the assumption that a first display region is a top display region and a second display region is a bottom display region.

Referring to FIG. 4, the controller 100 performs a display mode in step 411, and analyzes an output of a sensor 140 to determine whether the display unit 130 is bent at step 413. When the display unit 130 is not bent, the controller 100 displays display data processed in a corresponding application on one screen as illustrated in reference numeral 210 of FIG. 2. As illustrated in reference numeral 210 of FIG. 2, in a state that the display data are displayed on one screen, if the user bends the display unit 130 and the bending is achieved greater than a preset angle, the controller 100 detects that the display unit 130 is bent according to the output of the sensor 140.

If the display unit 130 is bent, the controller 100 detects the bent display unit in step 413 and divides a display region of the display unit 130 based on the bent location. That is, the bending of the display unit 130 is detected and the controller 100 sets the display regions of the display unit 130 based on a bent location of the display unit 130 at step 415. The controller 100 analyzes a currently executed application and display data and processes the display data by the divided display regions in step 417. The display data may be different according to the respective applications. For example, when the application is an Internet application, the display data may be configured by images and/or texts, or touch interaction information for controlling a displayed screen or information. To accomplish this, the memory 110 may include a table that stores information for discriminating display data by applications in a bending screen display mode.

As described above, after analyzing the display data, the controller 100 performs an operation that divides data to be displayed on display regions of the display unit 130 divided by bending in a corresponding application at step 417. For example, when the application is an application including touch interaction, the controller 100 may divide each screen into a main display data and a touch interaction data in step 417. As described above, after processing the display data by display regions of the display unit 130, the controller 100 separately displays the data on corresponding display regions, respectively in step 419. As described above, if data to be displayed is changed (e.g., a configuration of touch interaction data is changed) in a state that the data is separately displayed on respective display regions of the display unit 130, the controller 100 returns to step 415 and may again perform an operation of analyzing display data.

If the display unit 130 is bent while repeating the foregoing operation, the controller 100 divides a display region of the display unit 130 according to a bending location and separately displays data on divided display regions according to display information of a corresponding application. In this case, the bending is released by the user, data displayed on a display region whose bending is released is processed to be displayed on one display region at step 425, the processed display data is displayed on the display unit 130 in step 427 and the process returns to step 411. In this case, the releasing of the bending is displayed on two screens and the controller 100 configures and displays data separately displayed on two screens as one screen in step 425. If bending with partial screens is released in a state where at least three screens are displayed, the controller 100 performs an operation of displaying data displayed on corresponding divided screens on a processed and combined screen region (that is, a screen changed to one screen as a result of releasing the bending. In this case, the display unit 130 maintains a bent state in a specific location and releases the bending in a partial location).

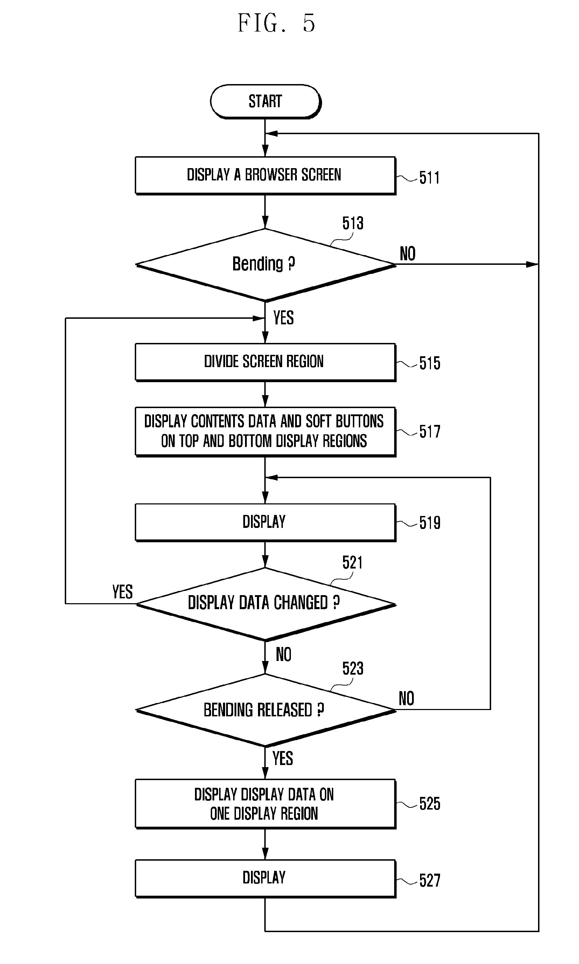

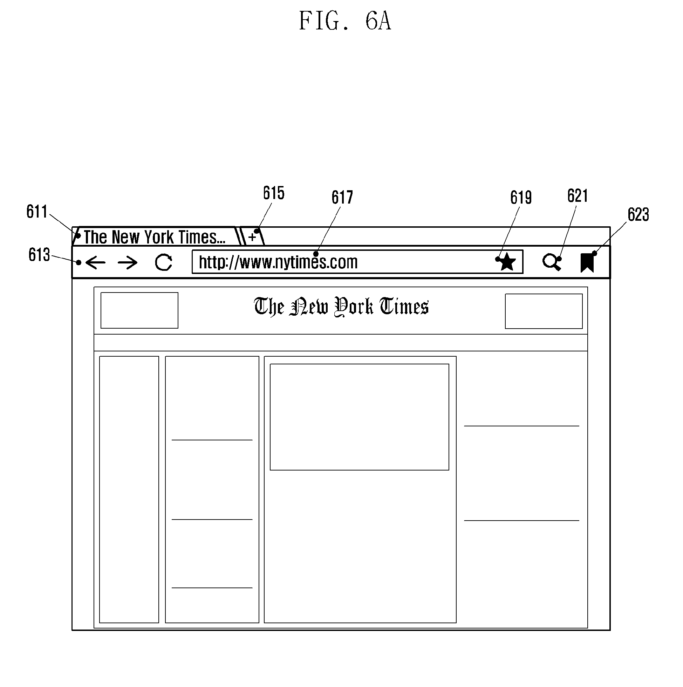

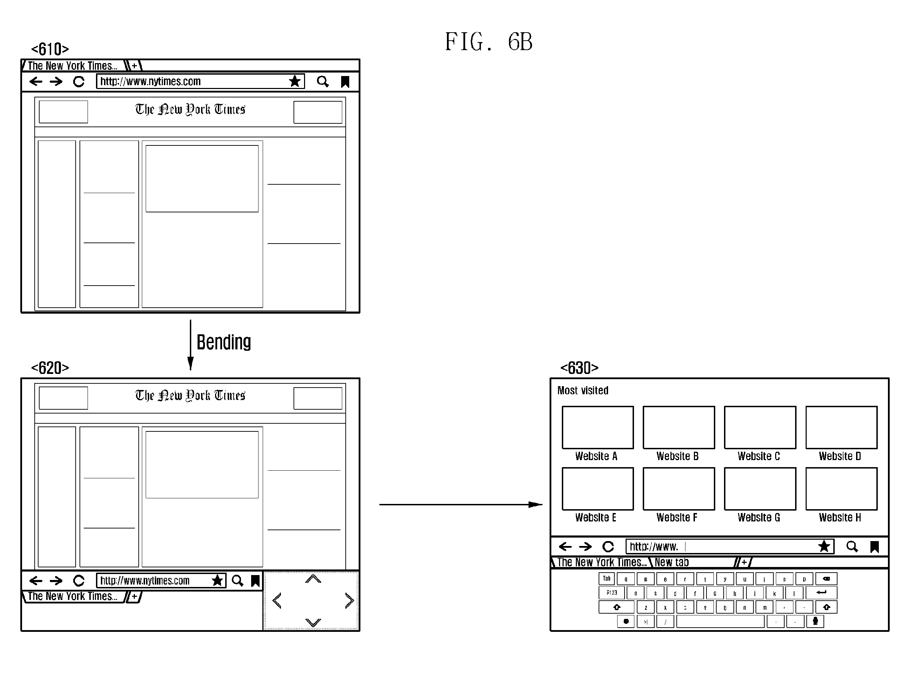

An overview of a method of displaying a portable device according to an embodiment of the present invention performed by a procedure shown in FIG. 4 will be described below in detail. FIG. 5 is a flowchart illustrating an operation in which a browser application is executed in a portable device having a flexible display according to an exemplary embodiment of the present invention. FIGS. 6a and 6b are a diagram illustrating a screen display example in which the operation shown in FIG. 5 is performed. The following description will be made on the assumption that a first display region is a top display region and a second display region is a bottom display region.

Referring to FIGS. 5 to 6b, FIG. 6a illustrates an example of a screen which is displayed on the display unit 130 during execution of a browser. As shown in FIG. 6a, a screen displayed on a browser application may include soft buttons inputting various touch interactions and a main page screen. Here, information capable of performing the touch interaction may be composed of buttons and display windows

FIG. 6a indicates previous/next/fresh 613, a current tab 611, new tab 615, address window 617, favorite 619, search 621, and bookmark 623 by way of example.

Accordingly, if the browser application is executed, the controller 100 displays a browser screen as illustrated in reference numeral 610 of FIG. 6a at step 511. In this case, if the display unit 130 is not bent and the controller 100 configures the display unit 130 as one screen. In this case, as illustrated in reference numeral 610, main page screen data (content) and soft buttons performing touch interaction are displayed on one screen.

If the user bends the display unit 130 in a state as mentioned above, the controller 100 detects bending of the display unit 130 according to an output of a sensor 140 in step 513, and divides a screen region of the display unit 130 according to a bending location as illustrated in reference numeral 620 at step 515. In this case, the display unit 130 may be divided into two display regions based on the bent location. After that, the controller 100 analyzes data of a browser application displayed on the display unit 130 at step 517, generates data to be displayed on respective display regions, and displays the generated display data on corresponding display regions of the display unit 130 in step 519. In this case, the browser application may be configured by content and soft buttons for performing touch interaction such as selection and movement of the content. Accordingly, the controller 100 displays content data on a top display region of the display unit 130 and displays soft buttons for touch interaction on a bottom display region as illustrated in reference numeral 620 of FIG. 6b in steps 517 and 519.

If the user touches a specific soft button of the bottom display region in a state that display data as illustrated in reference numeral 620 of FIG. 6b is displayed on respective display regions of the display unit 130, data to be displayed on the top display region and the bottom display region is changed. Then, the controller 100 returns to step 517 and reconfigures display data by display regions. If the user pushes a new tap of the bottom display region in a state that reference numeral 620 of FIG. 6b is displayed, the controller 100 detects the pushed new tap of the bottom display region and returns to step 517 and reconfigures display data by displace regions to display content and an address window on the top display screen and a key pad on the bottom display screen. In this case, the controller 100 displays a "Most visited" and an address window on the top display region of the display unit 130 and a key pad capable of inputting addresses on the bottom display region as illustrated in reference numeral 630 of FIG. 6b. In this case, to arrange the key pad on the bottom display region of the display unit 130, a button, a tap, an address, and a window may be moved to the top display region only while displaying the key pad.

As described above, when the display unit 130 is bent to from at least two display regions, the controller 100 separately displays data to be displayed by display regions according to the touch interaction of a user. In a case in which the display data has touch interaction information, if the display unit 130 is bent, it is preferable to arrange the display data on a display region capable of stably performing a touch operation. That is, when the display unit 130 is bent as illustrated in reference numeral 220 of FIG. 2, because the bottom display region has a structure making contact with a solid surface, it is preferable to arrange soft buttons and/or key pads for touch interaction on the bottom display region. That is because the portable device cannot maintain a stable state during the touch action if the touch interaction information is arranged on the top display region. Accordingly, it is preferable that the touch interaction information is arranged on a display region in which the portable device is arranged in a stable location contacting with a solid surface.

If the bending is released in the foregoing state, the controller 100 detects the released bending according to an output of the sensor 140 in step 523, displays display data on one display region in step 525, and displays the display data on the one screen of the display unit 130 in step 527. Next, the controller 100 returns to step 511 and performs a browser display mode.

As described above, in a case where the application is a Web browser application, if the display unit 130 is not bent (is flat), the controller 100 displays a screen of a web browser on the display unit 130 as is. However, when the display unit 130 is bent, the controller 100 separates data (Content, Button, WinSet, etc.) displayed on a web browser screen (flat screen) and displays the separated data on a divided (separated) screen by bending. In this case, data specified to a viewing is displayed on a screen displayed on the top display region of the display unit 130 and data specified to touch interaction is displayed on a screen on the bottom display region. In this case, only content (web page) may be displayed on the top screen and buttons, address windows, and TouchPad may be displayed on the bottom screen. Accordingly, during the execution of a web browser application, the controller 100 may separately display content and touch interaction information to provide a layout specified to content consumption during bending the display unit 130.

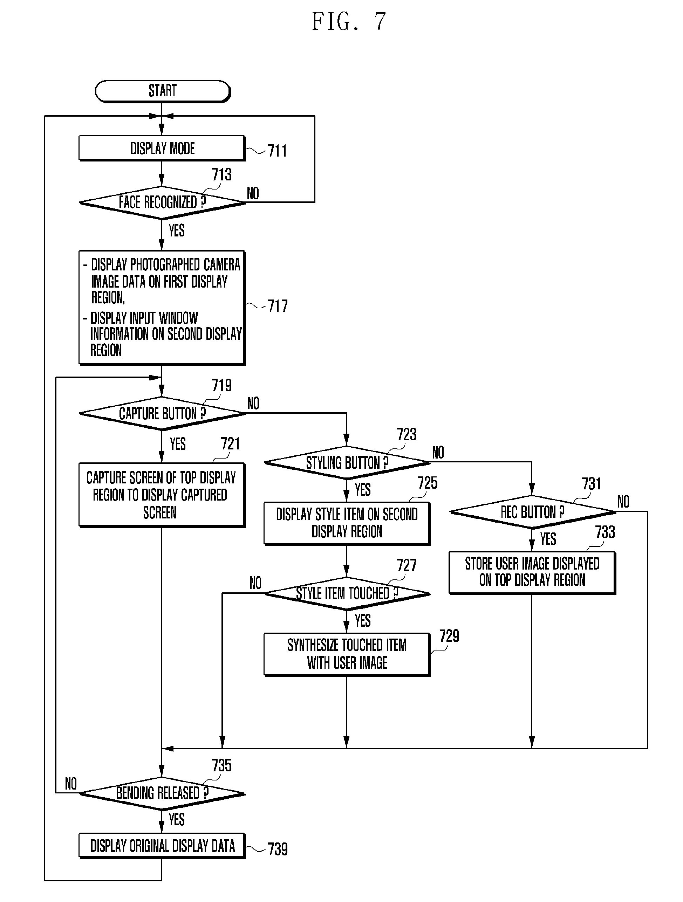

FIG. 7 is a flowchart illustrating a method of performing a smart mirror application in a portable device having a flexible display. Here, the smart mirror application refers to a function which recognizes a face of a user through a camera 170 and displays the recognized face of the user like a mirror.

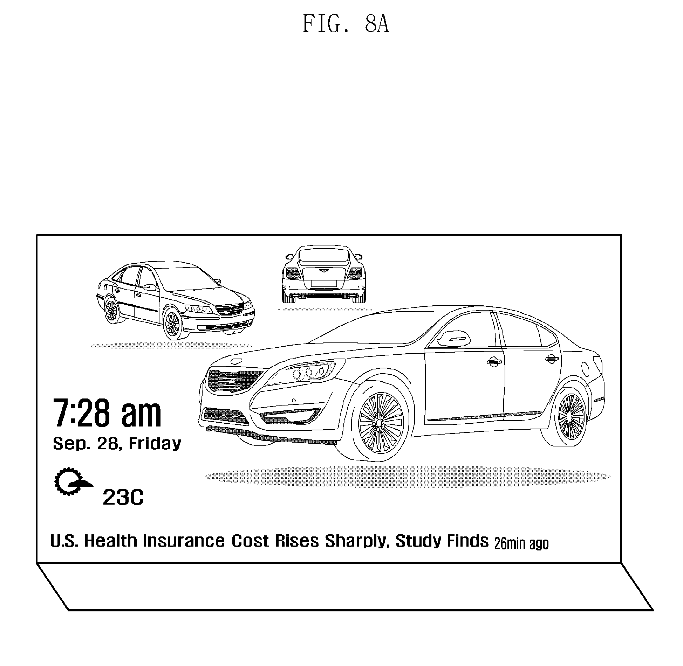

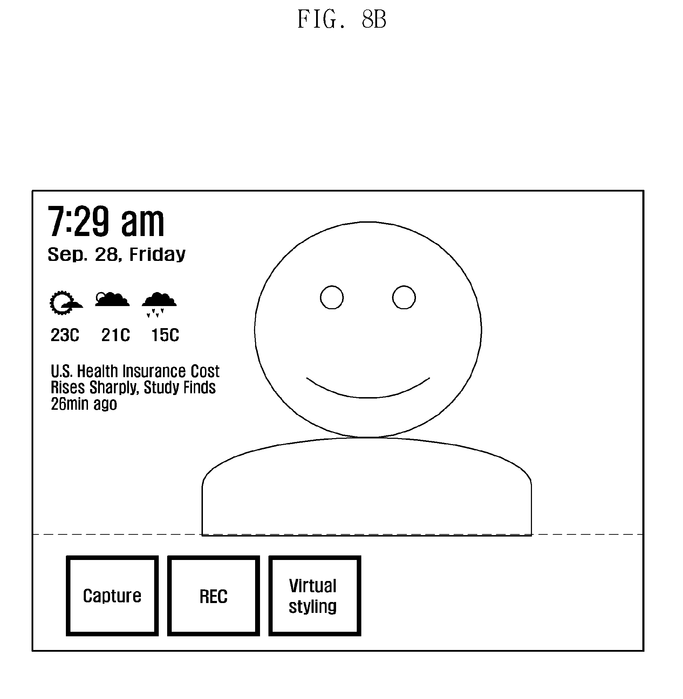

FIGS. 8a to 8e are diagrams ill string display examples of a smart mirror application performed by the method shown in FIG. 7, respectively. The following description will be made on the assumption that a first display region is a top display region and a second display region is a bottom display region.

Referring to FIGS. 7 to 8e, a user performs a smart mirror display mode in a state that the display unit 130 is bent. Upon performing the smart mirror display mode, the controller 100 drives the camera 170 at step 711. As shown in FIG. 8a, the controller 100 displays images (wallpaper, image side show) and simple widgets (time, date, weather, simple news, ....) determined by the user on the top display region of the display unit 130. However, the controller 100 may not display data on the top display region of the display unit 130.

If the user is located in front of the portable device in the foregoing state, a camera 170 provided in a front surface of the portable device photographs of a face of the user and the controller 100 recognizes the face of the user and displays the recognized face of the user on the top display region of the display unit 130. That is, if an image is received through the camera 170, the controller 100 analyzes the photographed image and recognizes that the photographed image is the face of the user at step 713, and converts the photographed image from the camera 170 to a mirror state while displaying the photographed imaged on the top display region of the display unit 130 at step 717. That is, the controller 100 processes the display data at step 717, displays widget information displayed on the top display region of the display unit 130 in one side, displays the photographed face image from the camera 170, and displays touch interaction information for performing the smart mirror function on the bottom display region. The touch interaction information may be a capture button, an REC button, or a styling (virtual styling) button.

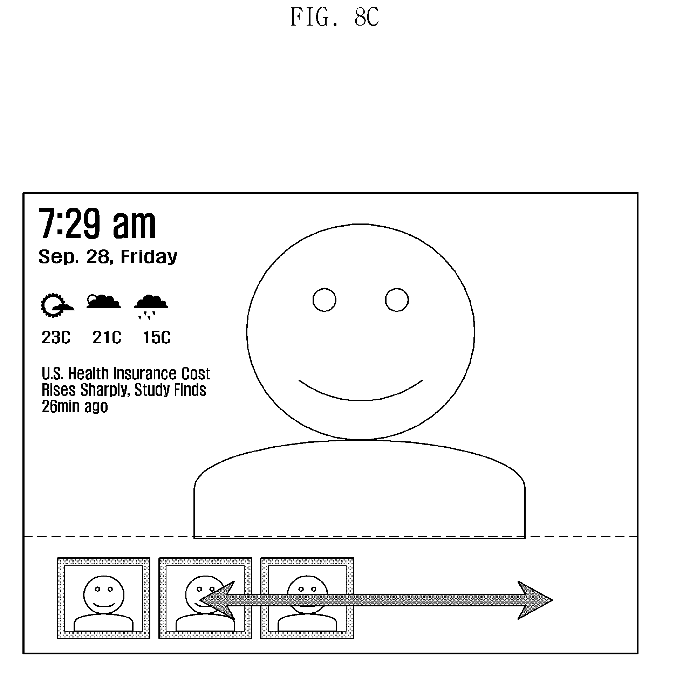

After that, the controller 100 analyzes input of touch interaction displayed on the bottom display region of the display unit 130 to execute a corresponding function. If the capture button is pressed, the controller 100 detects the pressed capture button at step 719. As shown in FIG. 8c, the controller 100 captures a screen of a top display region with a predetermined time interval to display the captured screen from a predetermined location (left side of FIG. 8c) of the bottom display region (generate transition effect) at step 721. If the user scrolls the bottom display region as shown in FIG. 8c, the controller 100 may sequentially display a left side, a right side, and a rear side of a scrolled region in the bottom display region.

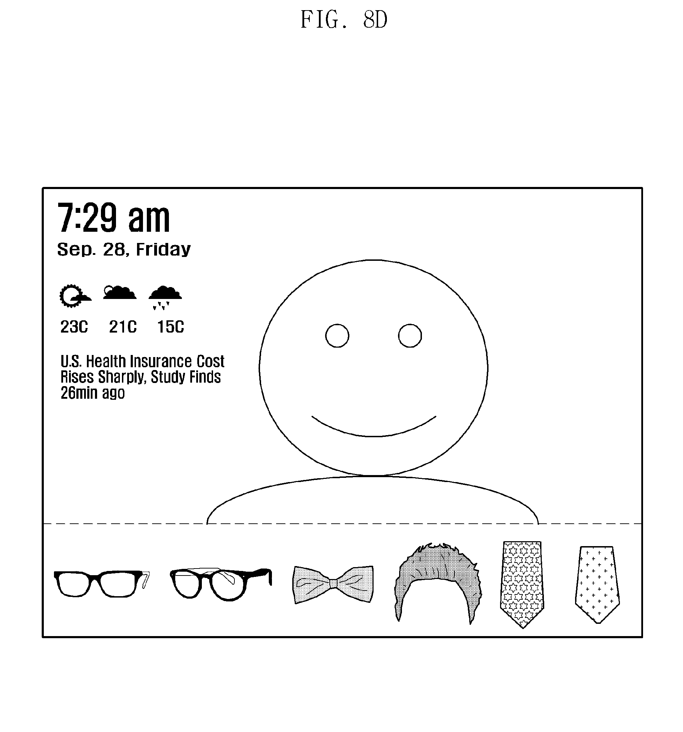

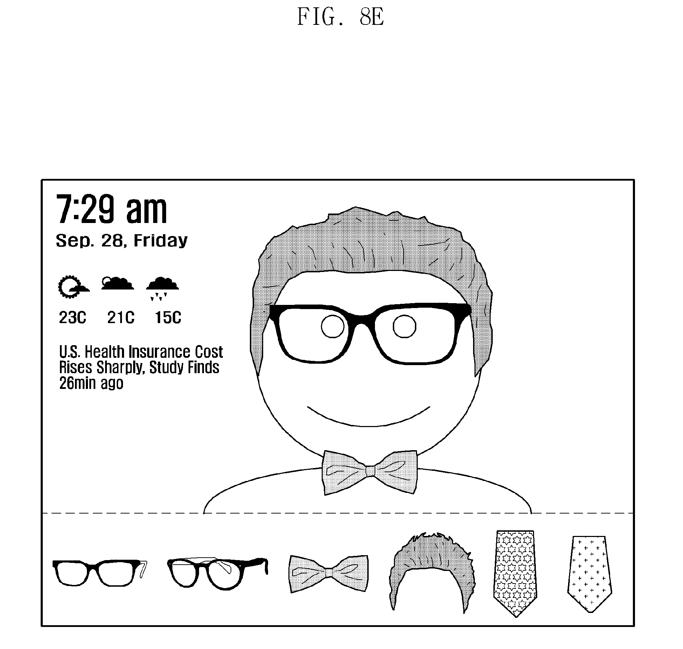

Secondly, if a styling button of the bottom display region is touched, the controller 100 detects the touched styling button of the bottom display region at step 723. As shown in FIG. 8d, the controller 100 displays a style item capable of decorating an image of a user on the bottom display region of the display unit 130 at step 725. The style item may be spectacles, necktie, head, or clothes. In this case, style items displayed on the bottom display region of the display unit 130 may be browsed left and right by the user. In this case, if a style item displayed on the bottom display region of the display unit 130 is touched, the controller 100 detects the touched style item at step 727. The controller 100 synthesizes the touched item with a user image displayed on the top display region of the display unit 130 as shown in FIG. 8e at step 729. In this case, touching the bottom display region may refer to a series of operations of touching a corresponding style item and dragging and dropping an image of the top display region. As another exemplary aspect of the present invention, if the user touches a specific item on the bottom display region, the controller 100 confirms the touched item, recognizes a user image to determine a location of an image with which the selected item is synthesized, and synthesizes the selected item with an image of a corresponding location. As described above, the controller 100 may select desired items by a styling button and virtually synthesize the selected desired items with the user image. In this case, when the user selects an item, the selected item is moved from a bottom display region of the display unit 130 to a touch display region thereof, and obtains a transition effect in which the selected item is synthesized with the user image.

Thirdly, if the user touches an REC button of a display region, the controller 100 detects the touched REC button of the display region at step 731. The controller 100 stores the user image displayed on the top display region of the display unit 130 in a memory 110 at step 733. If the smart mirror application is executed, the controller 100 photographs the user image through the camera 170, displays the photographed user image on the top display region of the display unit 130, and displays buttons for styling the user image on the bottom display region. In this case, if the user presses a capture button, the controller 100 captures the user image within a predetermined time interval. If the user presses a styling button, the controller 100 displays the style items and synthesizes a style item selected by the user with the user image. If the user touches the REC button, the controller 100 may store the user image displayed on the top display region of the display unit 130 in the memory 110.

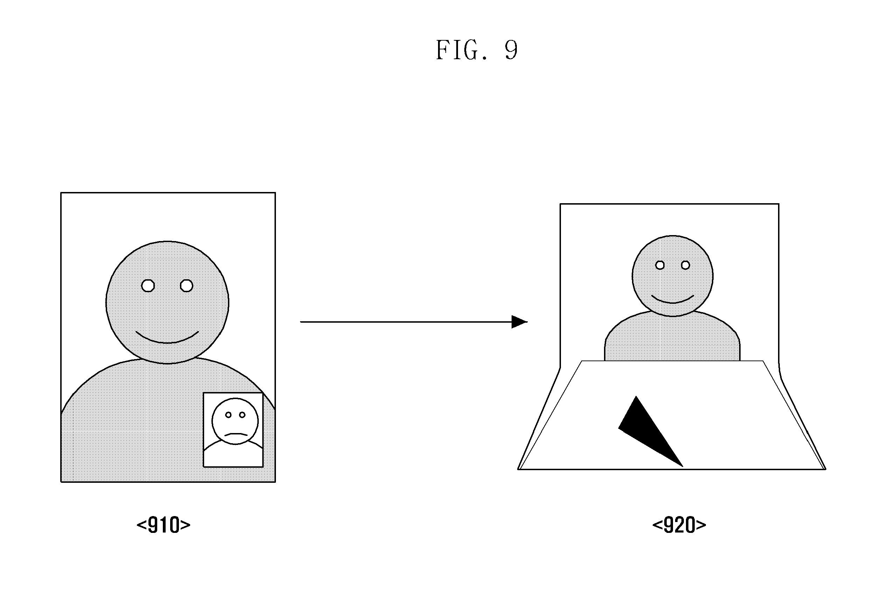

FIG. 9 is a diagram illustrating an operation during an image call in the portable device having a flexible display.

Referring to FIG. 9, a controller 100 displays images of a subscriber on the full display screen and the image of another subscriber on a smaller region as an overlay of the full display screen as illustrated in reference numeral 910 in a state that the display unit 130 is not bent during an image call. If bending of the display unit 130 is detected in the image call mode, the controller 100 displays the image of the another subscriber on a top display region and sets a bottom display region as a file sharing region as illustrated in reference numeral 920. Then, if the user selects a file displayed on the bottom display region of the display unit 130, the selected file is transmitted to another subscriber such that the file may be shared. As described above, if the display unit 130 is bent in an image call application, the controller 100 divides the display unit 130 into a region displaying an image of another subscriber and a region capable of sharing the file. During the sharing the file function, if the user pushes the file on a display region of another subscriber in a state that the file is put on the file sharing region, a corresponding file may be shared. A method of sharing the file as described above is equally applicable to an application such as memo or phone-book being a similar application.

As described above, in the portable device including a flexible display unit, if the display unit is bent, the portable device confirms a bending location of the display unit to divide the display unit into a plurality of display regions. After, the portable device confirms a currently executed application, and displays data having different functions on a plurality of display regions divided due to bending according to a user purpose and environment of a corresponding application. In this case, a display region of a location contacting with a solid surface among display regions divided due to bending of the display unit may stably maintain the portable device even during contact of the user. Accordingly, it is preferable that content and main display data in a currently executed application are displayed on a main screen display region, and touch interaction information for controlling or processing data displayed on the main screen display region are arranged and displayed on a display region contacting with the solid surface.

During execution of the application, displayed data are generally configured as content and touch interaction information for controlling the content. The content refers to main display data executed in each application. For example, the content may be web page data in a case of a web browser application. The content may be image data in a case of a movie. The content may be a game execution screen in a case of a game. The content may be photographic image data in case of camera photography. The touch interaction information may be various means generating a touch event such as a button and a key pad for selecting, changing, and moving the foregoing content. In this case, the region displaying the touch interaction information may have a display region of a size smaller than that of the region displaying the content. In a case of an application that displays a large amount of information (e.g., case of an application displaying key board, and various input windows, and buttons), the controller 100 may display only touch interaction information (e.g., touch interaction not used in a current state) and display the remaining touch interaction information (touch interaction not used in a current state) on a region displaying content.

In the embodiments of the present invention, when using the portable device including a bendable display, an optimal user experience (UX) can be provided when a screen is bent according to a user environment and a user purpose.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Although exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims.

## Claims

1. A portable device, comprising:
a display unit configured to be a bendable flexible display;
a touch panel integrally configured with the display unit for detecting touch input;
a sensor mounted in a bending location of the display unit for detecting a bending of the display unit; and
a controller dividing a display region of the display unit based on a bending location of the display unit when the bending of the display unit is detected from an output of the sensor, and separately outputting display data on respectively divided display regions.

2. The portable device of claim 1, wherein the controller separately outputs the display data from a content and a touch interaction information controlling the content on the respective display regions of the display unit.

3. The portable device of claim 2, wherein the controller outputs the touch interaction information on a bottom display region of the display unit contacting with a solid surface.

4. The portable device of claim 3, wherein when the touch interaction information displayed on the bottom display region exceeds a size of the display region, the controller moves and displays the touch interaction information other than the touch interaction information for controlling current content to and on a content display region.

5. The portable device of claim 3, wherein when the display data is changed by touching the touch interaction information, the controller reconfigures a changed content and a changed touch interaction information and outputs a reconfigured changed content and a reconfigured touch interaction information on corresponding display regions, respectively.

6. The portable device of claim 3, wherein the display unit comprises a hinge for bending the display unit in a specific location of a bezel, and is bent in the hinge.

7. A method of displaying a screen on a portable device, the method comprising:
detecting a bending of a display unit configured to be a flexible display;
dividing a display region of the display unit based on a bending location when the bending of the display unit is detected; and
displaying separate display data on the divided display regions by separating the display data.

8. The method of claim 7, wherein the displaying of the separate display data comprises separately displaying a content and a touch interaction information for controlling the content on respective display regions.

9. The method of claim 8, wherein the displaying of the separate display data comprises outputting the touch interaction information on a bottom display region of the display unit contacting with a ground.

10. The method of claim 9, further comprising moving and displaying the touch interaction information other than the touch interaction information for controlling a current content to and on a content display region when a size of the touch interaction information displayed on the bottom display region exceeds a size of the display region.

11. The method of claim 9, further comprising reconfiguring and outputting a changed content and a changed touch interaction information on respective display regions when the display data is changed by touching the touch interaction information.

12. The method of claim 9, wherein the display data comprises web browser data, and
displaying of the separate display data further comprises: displaying content on a top display region of the display unit, and displaying the touch interaction information including a soft button, an information window, and a touch pad for controlling the content on the bottom display region.

13. The method of claim 12, further comprising reconfiguring the content and the touch interaction information such that the display data set to a corresponding function of the soft button when the soft button is touched is outputted.

14. The method of claim 13, further comprising displaying a key pad on the bottom display region of the display unit and moving and displaying touch interaction information except for the key pad to and on the content display region.

15. The method of claim 9, wherein the display data comprises smart mirror data, and
displaying of the separate display data further comprises: displaying a user image photographed from a camera on the top display region of the display unit when the user image is detected, displaying a capture button for capturing the user image, a styling button for styling the user image, and the touch interaction information of an REC button for storing the user image on the bottom display region.
